# EUROPEAN PATENT APPLICATION

(11) **EP 1 418 219 A2**
(43) Date of publication of application: **12.05.2004**
(21) Application number: 03256988.1
(22) Date of filing: 05.11.2003
(51) Int. Cl.: C09K 21/00

(54) **Fire resistant materials**

(30) Priority: 09.11.2002 GB 0226230
(71) Applicant: Bonar Floors Limited, Derbyshire, DE5 3NT (GB)
(72) Inventor: Pierre-Marie, Bernard, Ripley Derbyshire DE5 3NT (GB); Lewin, John, Ripley Derbyshire DE5 3NT (GB)
(74) Representative: Womsley, Nicholas

(57) **Abstract**

A fire resistant material (10) and a method of producing same, comprising a fire resistant backing (12) of polyaramid, glass fibre or other suitable material and a pile of fibres (14) attached to and extending generally perpendicularly from the backing (12) at a weight of less than 100 g/m².

## Description

The present invention relates to fire resistant materials and particularly but not exclusively to fire resistant materials for use as surface coverings.

In certain environments, such as aircraft and in particular passenger aircraft, it is important that where possible surface coverings have good fire resistant properties. For reasons of safety, particularly regarding fire safety there currently exist many stringent requirements relating to materials that can be used in aircraft, and this has to date restricted the nature of coverings which can be used on items such as wall, door and ceiling panels, furniture, soft furnishings and such like.

Conventionally, the likes of wall and ceiling panels had been covered with polyaramid or similar fire resistant material. Polyaramid is expensive. It is also prone to stain easily and is difficult to apply to surfaces to provide an aesthetic appearance. It has also been found that polyaramid wears poorly, tending to fluff as a result of contact either by people or objects rubbing thereagainst.

According to the present invention there is provided a fire resistant material comprising a fire resistant backing with a pile of fibres attached thereto at a weight of less than 100 g/m².

In this specification, the term fire resistant relates to properties of resisting catching fire. It is also preferable that fire resistance includes characteristics of fire retardance and desirably release energy control.

Preferably the weight of fibres is in the range of approximately 50-70 g/m².

Preferably the fibres have a decitex value of no greater than 5. For clarification, decitex is a measurement of the weight in grams of a 10 kilometre length of a single fibre.

Preferably the fibres are substantially evenly distributed throughout the fibre pile to have substantially even distribution over the backing.

The preferred fibre has a decitex value of less than 1 and ideally 0.9.

The fibres may be up to approximately 1 mm in length and are preferably approximately 0.6 mm long.

The fibres may not be particularly fire retardant, but their presence in the aforesaid amounts provides the material with overall fire retardant characteristics.

The fibres may be electrostatically chargeable, and may comprise nylon and are preferably substantially linear.

Preferably the fire resistant backing comprises polyaramid. Alternatively or in addition the backing material may comprise a glass fibre material, which may be woven.

Preferably an adhesive attaches the fibres to the backing. The adhesive is preferably fire resistant.

Preferably the fibres are attached to extend generally perpendicularly from the backing. The fibre pile may be modified by embossing, air embossing, sheering or any other known finishing technique, to give the material a desired aesthetic effect, such as that of leather.

The fibre pile may be printed or otherwise coloured.

According to a further aspect of the present invention there is provided a body having attached thereto a fire resistant material substantially as described above in the preceding thirteen paragraphs.

The material is preferably attached to the body so that the fibre pile is visible during normal use of the body, whereby the material can be used to give the body an aesthetic fire resistant covering.

The backing is preferably secured on the body with a suitable adhesive.

According to a still further aspect of the present invention there is provided a method of producing a fire resistant material, the method comprising applying a pile of fibres to a fire resistant backing at a weight of less than 100 g/m².

Preferably a pile of substantially straight, non-looped fibres is applied to the backing, such that the fibres extend substantially perpendicularly from the general plane of the backing, which is preferably in the form of a sheet.

The fibres may be applied by electrostatically charging the fibres and subjecting them to an electrostatic field which drives them to attach to the backing. An adhesive may be applied to the backing to attach the fibres thereto.

An embodiment of the present invention will now be described by way of example only, with reference to the accompanying drawings in which:-
Fig. 1 is a diagrammatic cross-section of a fire resistant material according to the present invention; and
Fig. 2 is a schematic representation of a method of producing a fire resistant material according to the present invention.

Referring to the drawings there is provided a fire resistant material 10 comprising a fire resistant backing 12 and a pile of fibres 14 attached to the backing 12 at a weight of less than 100 g/m².

It is preferred that the weight of fibres is in the range of approximately 50-70 g/m². The weight of each fibre used per unit length, the length of the fibres used and the density of the pile is determined to produce appropriate fibre weights with the aforesaid range.

Fibres having a decitex value of no greater than 5 have been found particularly suitable and enable fibres of suitable length and pile densities to be achieved.

In a particularly preferred arrangement the fibres have a decitex value of less than 1 and ideally 0.9. Each fibre is approximately 0.6 mm long. Using such fibres to produce a pile substantially evenly distributed over the backing as described below results in a pile fibre weight a weight of less than 100 g/m².

This low weight of pile is an important feature of the present invention. It results in a pile which does not present any significant fire risk (even if the material of the fibres itself has no or relatively poor fire retardant properties) and thus gives, in conjunction with the fire resistant adhesive 16 and backing 12, a material 10 which has overall fire resistant characteristics. It has also been found that such material 10 shows fire retardant properties and release energy control, which means that should the conditions to which the material 10 is exposed be such that the material does ignite the heat emitted as it burns is relatively low thereby reducing the likelihood of the burning material 10 igniting surround materials.

The inherent fire resistant nature of the backing 12 and the adhesive 16 ensures that the overall fire resistant character of the material 10 is not susceptible to degradation through wear or the like. This ensures that the fire resistant characteristics are effectively permanent, even if there should be any wear of the fibre pile 14.

The fibres 14 are essentially straight and extend generally perpendicularly from the general plane of the backing 12. A layer of adhesive 16 attaches the fibres 14 to the backing 12. The adhesive used is a fire resistant adhesive.

The backing material can be polyaramid, such as NOMEX and/or a glass fibre material, such as a woven fibre in the form of a relatively thin sheet, approximately 0.1-0.5 mm thick.

The material 10 whilst giving fire resistant characteristics and the protection that this can afford, also provides a surface by way of the pile 14 which is generally considered pleasant to the touch and aesthetic in appearance. The pile 14 can be printed to give it a desired surface pattern, or otherwise coloured to choice. Preferably the inks used have fire resistant characteristics.

As an alternative or in addition, the pile 14 may be embossed using conventional techniques to give the pile 14 a desired appearance, such as that of the grain of leather.

The material 10 is intended particularly for use in covering surfaces, such as wall surfaces, panelling and ceiling surfaces such as in aircraft environments where fire resistance is necessary or preferred. The materials of the present invention provide good fire resistant protection, whilst providing considerable advantage over known materials. As well as being considered generally more aesthetic than known materials, the material of the present invention is very hard wearing and resistant to staining.

The material 10 can be used to cover walls, ceilings and panels or other suitable surfaces within an aircraft by using suitable adhesive which is itself preferably fire resistant. It will be appreciated however that the material itself could be used to produce items such as curtains or screens which would not necessarily require the material to be used as a cover on another body or article.

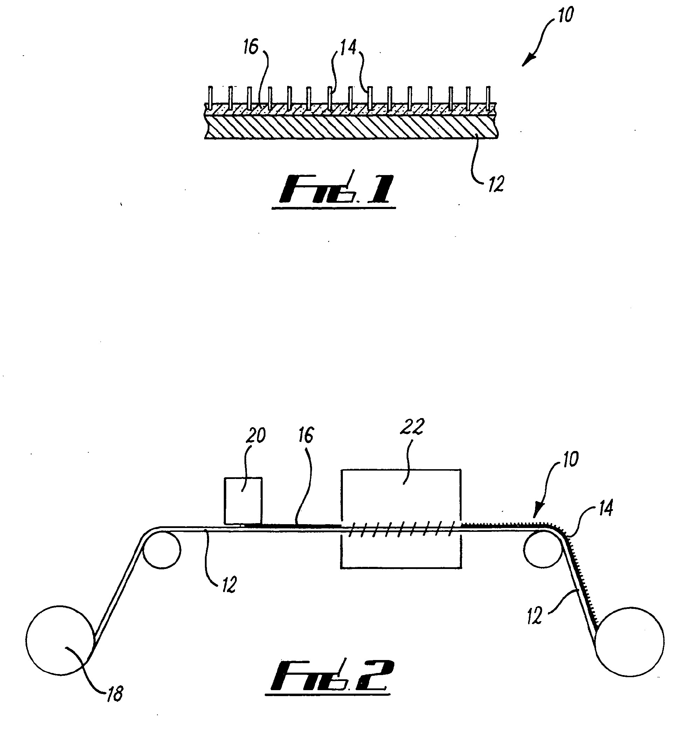

Referring to Fig. 2, the invention also provides a method of producing a fire resistant material 10 the method comprising applying a pile of fibres 14 to a fire resistant backing 12 at a weight of less than 100 g/m².

The backing material 12 is supplied from a roll 18 of such material to pass beneath an adhesive station 20 which applies a layer of adhesive 16 on a surface of the material 12. The adhesive-coated backing is then passed through a flocking station 22 which acts to form the fibre pile 14 on the adhesive layer 16. The flocking station 22 comprises a chamber through which an electrostatic field is generated. A supply of fibres is presented within the chamber 22, the fibres being electrostatically charged such that upon exposure to the electrostatic field within the chamber 22 the fibres are driven down onto the adhesive layer 16 to extend generally perpendicularly therefrom from one end to form a pile, often referred to as a flocked pile.

Material exiting the station may then be either allowed to cure under atmospheric conditions or passed through a curing station (not shown) to cure the adhesive layer 16 to securely attach the fibres 14. The material 10 may then be rolled, calendared or processed in other ways for storage and use.

Various modifications may be made without departing from the spirit or scope of the present invention.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. Fire resistant material **characterised in that** the material comprises a fire resistant backing (12) with a pile of fibres (14) attached thereto at a weight of less than 100 g/m².

2. Fire resistant material as claimed in claim 1, **characterised in that** the weight of fibres (14) is in the range of approximately 50-70 g/m².

3. Fire resistant material as claimed in any preceding claim, **characterised in that** the fibres (14) have a decitex value of no greater than 5.

4. Fire resistant material as claimed in any preceding claim, **characterised in that** the fibres (14) are substantially evenly distributed throughout the fibre pile (14) to have substantially even distribution over the backing (12).

5. Fire resistant material as claimed in claim 3 or claim 4, **characterised in that** the fibre (14) has a decitex value of less than 1.

6. Fire resistant material as claimed in claim 5, **characterised in that** the fibre (14) has a decitex value of 0.9.

7. Fire resistant material as claimed in any preceding claim, **characterised in that** the fibres (14) are up to approximately 1 mm in length.

8. Fire resistant material as claimed in claim 7, **characterised in that** the fibres (14) are approximately 0.6 mm long.

9. Fire resistant material as claimed in any preceding claim, **characterised in that** the fibres (14) are electrostatically chargeable.

10. Fire resistant material as claimed in any preceding claim, **characterised in that** the fibres (14) comprise nylon.

11. Fire resistant material as claimed in any preceding claim, **characterised in that** the fibres (14) are substantially linear.

12. Fire resistant material as claimed in any preceding claim, **characterised in that** the fire resistant backing (12) comprises polyaramid.

13. Fire resistant material as claimed in any preceding claim, **characterised in that** the backing material (12) comprises a glass fibre material.

14. Fire resistant material as claimed in claim 12 or claim 13, **characterised in that** the glass fibre material is woven.

15. Fire resistant material as claimed in any preceding claim, **characterised in that** an adhesive attaches the fibres (14) to the backing (12).

16. Fire resistant material as claimed in claim 15, **characterised in that** the adhesive is fire resistant.

17. Fire resistant material as claimed in any preceding claim, **characterised in that** the fibres (14) are attached to extend generally perpendicularly from the backing (12).

18. Fire resistant material as claimed in any preceding claim, **characterised in that** the fibre pile (14) is modified by embossing, air embossing, sheering or any other known finishing technique, to give the material a desired aesthetic effect, such as that of leather.

19. Fire resistant material as claimed in any preceding claim, **characterised in that** the fibre pile (14) is printed or otherwise coloured.

20. A body **characterised in that** the body has attached thereto fire resistant material as defined in any of the preceding claims.

21. A body as claimed in claim 20, **characterised in that** the material is attached to the body so that the fibre pile (14) is visible during normal use of the body, whereby the material can be used to give the body an aesthetic fire resistant covering.

22. A body as claimed in claim 20 or claim 21, **characterised in that** the backing (12) is secured on the body with a suitable adhesive.

23. A method of producing a fire resistant material, **characterised in that** the method comprises applying a pile of fibres (14) to a fire resistant backing (12) at a weight of less than 100 g/m².

24. A method as claimed in claim 23, **characterised in that** a pile of substantially straight, non-looped fibres (14) is applied to the backing (12), such that the fibres (14) extend substantially perpendicularly from the general plane of the backing (12).

25. A method as claimed in claim 23 or claim 24, **characterised in that** the backing (12) used is in the form of a sheet.

26. A method as claimed in any of claims 23 to 25, **characterised in that** the fibres (14) are applied by electrostatically charging the fibres (14) and subjecting them to an electrostatic field which drives them to attach to the backing (12).

27. A method as claimed in any of claims 23 to 26, **characterised in that** an adhesive is applied to the backing (12) to attach the fibres thereto.
